# EUROPÄISCHE PATENTSCHRIFT

(11) **EP 1 671 533 B1**
(45) Veröffentlichungstag und Bekanntmachung des Hinweises auf die Patenterteilung: **17.09.2008**
(21) Anmeldenummer: 05027689.8
(22) Anmeldetag: 17.12.2005
(51) Int. Cl.: A01G 23/099

(54) **Baumscharnier, welches des Scharnieroberteil bei Erreichen eines vorgegebenen Fallwinkels vom Scharnierunterteil freigibt**
Tree hinge, in which the lower part releases from the higher part when the falling angle reaches a certain value
Charnière d'arbre, dans laquelle la partie supérieure se libère de la partie inférieure lorsque l'angle de chute atteint une certaine valeur

(43) Veröffentlichungstag der Anmeldung: 21.06.2006
(73) Patentinhaber: Waldinger, Philipp, 85464 Finsing (DE)
(72) Erfinder: Waldinger, Philipp, 85464 Finsing (DE)

(56) Entgegenhaltungen:
- DE-B3- 10 315 939
- US-A- 3 219 075
- US-A- 3 548 899

## Beschreibung

Die Erfindung, betrifft ein Baumscharnier nach dem Oberbegriff des Anspruches 1.

Ein derartiges Baumscharnier ist z.B. aus der DE 103 15 939 B3 vorbekannt.

Beim Gebrauch derartiger Baumscharniere tritt das Problem auf, dass bei bodennaher Anlage des Fällschnittes der fallende Baumstamm bei Erreichen eines bestimmten Fallwinkels sich mit seitlich abstehenden Ästen des unteren Stammbereiches am Erdboden abstützt und durch das Gewicht des fallenden Kronenbereiches nach oben gerichtete Kräfte auf das Baumscharnier einwirken, welche dieses unötig belasten bzw. zu dessen vorzeitiger Zerstörung führen. Außerdem ist das aus Ober- und Unterteil bestehende Baumscharnier im zusammengebauten Zustand relativ schwer und unhandlich, was sich insbesondere beim Einsatz im Steilgelände bzw. Gebirge nachteilig auswirkt.

Aufgabe der Erfindung ist es, die bei Erreichen eines bestimmten Fallwinkels auftretende Überbelastung des Baumscharnieres zu verhindern und gleichzeitig dessen Handhabung zu erleichtern.

Zur Lösung dieser Aufgabe werden die im Anspruch 1 angegebenen Maßnahmen vorgeschlagen.

Vorteilhafte Ausgestaltungen sind Gegenstand der Unteransprüche 2 bis 4.

Eine bevorzugte Ausgestaltung der erfindungsgemäßen Lösung macht dabei von dem kinematischen Prinzip teilbarer

Scharniere z.B. nach der DE 29 41 858 C2, der DE 299 16 499 U1 oder der DE 94 07 824 U1 Gebrauch, bei denen ein in der Gelenkhülse vorgesehener Längsschlitz den radikalen Durchtritt des dazugehörigen abgeflachten Gelenkbolzens in jeweils nur einer vorbestimmten Winkellage von Gelenkhülse und Gelenkbolzen ermöglicht, in den übrigen Winkellagen jedoch das Drehgelenk zusammengehalten wird.

Zwar ist die Anwendung eines abgeflachten Bolzens zur Herstellung einer schnell lösbaren Verbindung auch auf dem Gebiet der Forsttechnik (vgl. DE 10 33 947 B) bekannt; eine Anregung zur patentgemäßen Lösung, nämlich das Baumscharnier in der Weise teilbar auszubilden, dass es bei Erreichen eines vorgegebenen Fallwinkels des Baumstammes dessen Oberteil vom Unterteil freigibt, war dadurch jedoch nicht gegeben.

Anhand der Zeichnung werden Ausführungsbeispiele des Gegenstandes der Erfindung näher erläutert.
Es zeigen:
- Fig. 1: Baumscharnieroberteil und -unterteil am Baum befestigt; vor Durchführung des Fällschnittes,
- Fig. 2: Fallen des Baumes, Baumscharnieroberteil wird vom Baumscharnierunterteil freigegeben,
- Fig. 3: vollständig umgefallener Zustand des Baumes; Ausrüstung mit Fangelement zwischen Baumstamm und Baumstumpf,
- Fig. 4: Draufsicht auf Baumscharnierunterteil und den Baumstumpf nach dem Umschneiden des Baumes.

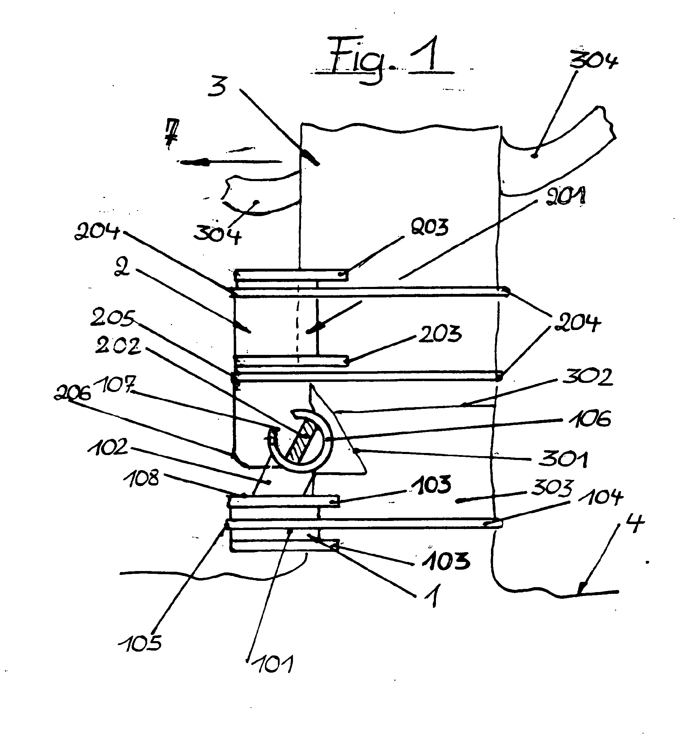

### Die Fig. 1 zeigt in der Seitenansicht vor Durchführung des Fällschnittes (302):

Das Baumscharnierunterteil (1), dessen Grundkörper (101) mit dem Baumstumpf (303) durch eine oder mehrere Ketten, Gurte, Seile (104), gespannt durch die Spannvorrichtung (105), gegen Verdrehen und Abrutschen gesichert durch die verzahnten Konturen (103), verbunden ist.
Es liegt auf dem Erdboden (4) auf, ist in der Kerbe (301) angeordnet.
Es weist eine Drehgelenkplatte (102) und eine Drehgelenkhülse (106) mit Längsschlitz (107) und eine Auflageplatte (108) auf.
Das Baumscharnieroberteil (2) mit Grundkörper (201), gesichert durch die verzahnten Konturen (203) an dem Baum (3) mit Ästen (304), mit einer oder mehreren Ketten, Gurte, Seile (204), gespannt mit der Spannvorrichtung (205), positioniert in Fallrichtung (7), sowie mit einer Kontur (206). Das Baumscharnieroberteil (2) weist einen abgeflachten Gelenkbolzen (202) auf.

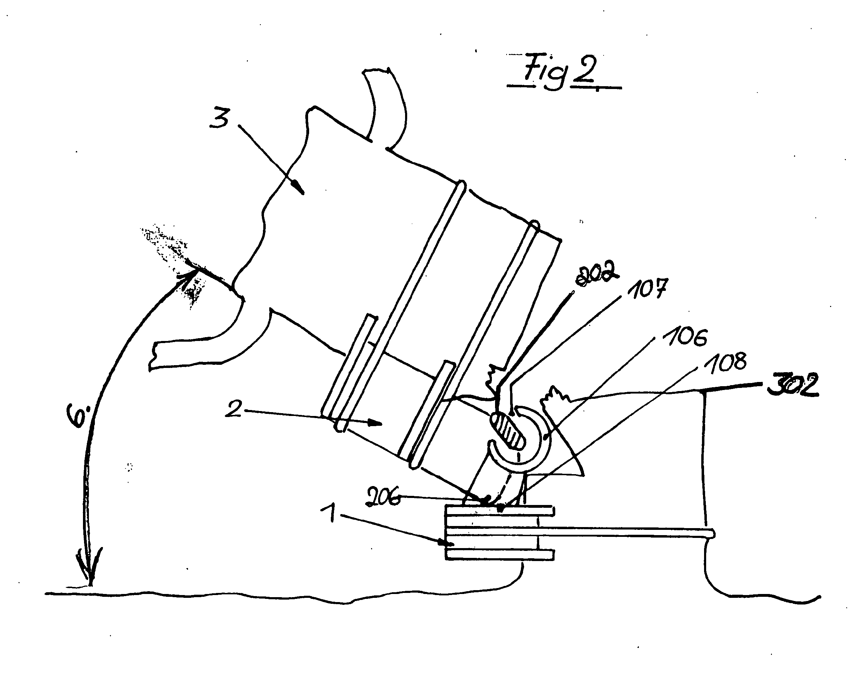

### Die Fig. 2 zeigt in der Seitenansicht nach Durchführung des Fällschnittes (302):

Das automatische Trennen des Baumscharnieroberteils (2) vom Baumscharnierunterteil (1) bei Erreichen des vorgegebenen Fallwinkels (6). Dabei tritt der abgeflachte Gelenkbolzen (202) durch den Schlitz (107) der Gelenkhülse (106), wobei dieser dadurch angehoben wird, indem die Kontur (206) des Baumscharnieroberteils (2) sich auf der Auflageplatte (108) des Baumscharnierunterteils (1) abstützt.

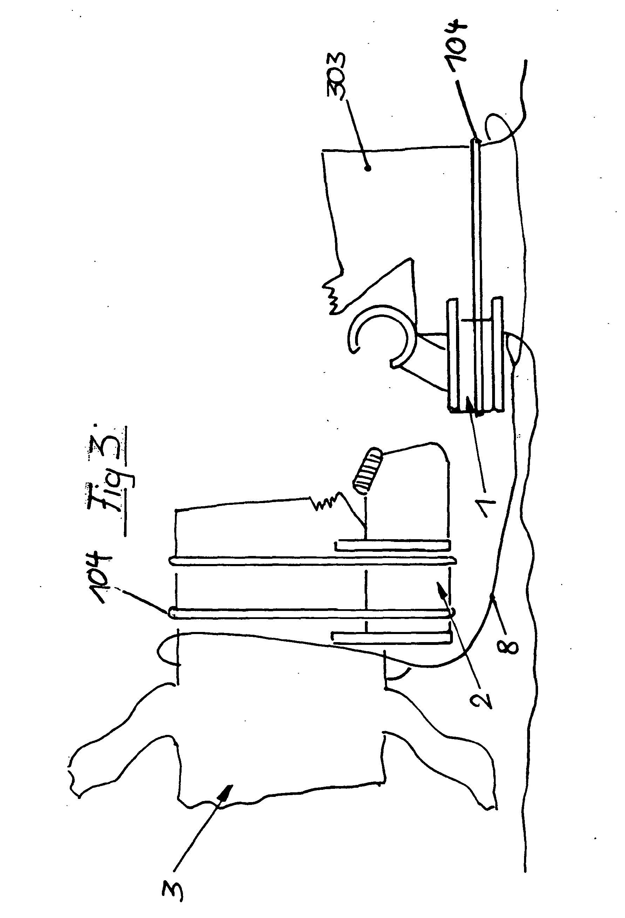

### Die Fig. 3 zeigt in der Seitenansicht:

Den Baumstumpf (303) verbunden mit dem Baumscharnierunterteil (1), getrennt vom Baumstamm (3) und verbunden mit dem Baumscharnieroberteil (2) im vollständig umgefallenen Zustand. Gegen weiteres Wegrutschen ist der Baumstamm (3) am Baumstumpf (303) durch ein Fangelement (8) in Form eines losen Seiles, einer Kette, eines Gurtes (104) gesichert.

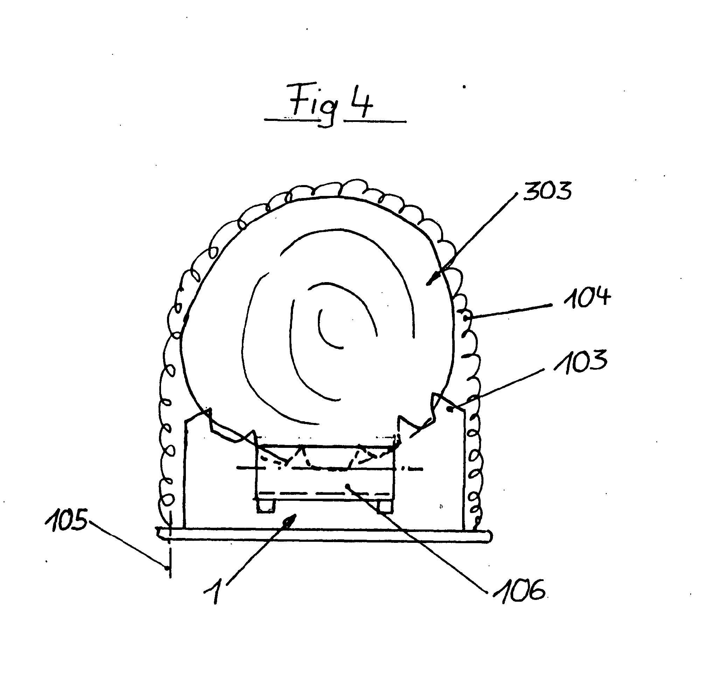

### Die Fig. 4 zeigt in der Draufsicht:

Das Baumscharnierunterteil (1) mit der Gelenkhülse (106), welches mit der verzahnten Kontur (103), mit dem Baumstumpf (303) fest durch Seil, Kette, Gurt (104) und gespannt durch die Spannvorrichtung (105) verbunden ist.

Bei Benutzung des Baumscharnieres (1,2) wird nach Herstellung der Kerbe (301) zunächst das Baumscharnierunterteil (1) entsprechend der Fallrichtung (7) als getrenntes Bauteil am (künftigen) Baumstumpf (303) möglichst nahe über dem Erdboden (4) befestigt. Anschließend wird das Baumscharnieroberteil (2) ebenfalls als getrenntes Bauteil angehoben und dessen abgeflachter Gelenkbolzen (202) über den Schlitz (107) in die Gelenkhülse (106) eingefädelt. Danach wird das Baumscharnieroberteil (2) weiter bis zur Anlage an den Baumstamm (3) nach oben geschwenkt und dort befestigt.

Dem Benutzer ist die Handhabung dadurch wesentlich vereinfacht, weil er nur durch das gegenüber der Gesamtanordnung geringere Gewicht der getrennten Bauteile belastet wird und diese Bauteile einfach und ohne der Erfordernis weiterer Hilfsmittel miteinander zum funktionsfähigen Baumscharnier gekuppelt werden können.

## Patentansprüche

1. Baumscharnier (1,2) zur Vorbestimmung der Fallrichtung (7) eines durch einen Fällschnitt (302) zu fällenden Baumstammes (3), mit einem in Höhe des vorzunehmenden Fällschnittes (302) anzuordnenden, in Fallrichtung (7) klappbaren Drehgelenk (106, 107, 202), das eine oberhalb des Fällschnittes (302) am Baumstamm (3) befestigbares Baumscharnieroberteil (2) und ein unterhalb des Fällschnittes (302) am Baumstumpf (303) nach Maßgabe der vorgegebenen Fallrichtung (7) befestigbares Baumscharnierunterteil (1) aufweist, **dadurch gekennzeichnet, dass** das Drehgelenk (106, 107, 202) teilbar ausgebildet ist, um bei Erreichen eines vorgegebenen Fallwinkels (6) des Baumstammes (3) das Baumscharnieroberteil (2) vom Baumscharnienmterteil (1) freizugeben.

2. Baumscharnier (1,2) nach Anspruch 1,
**dadurch gekennzeichnet, dass** das Drehgelenk (106,107,202) aus einer einen Schlitz (107) aufweisenden Gelenkhülse (106) und einem abgeflachten Gelenkbolzen (202) besteht, wobei nur in der Stellung des Fallwinkels (6) der abgeflachte Gelenkbolzen (202) durch den Schlitz (107) der Gelenkhülse (106) durchtreten kann.

3. Baumscharnier (1,2) nach Anspruch 2,
**dadurch gekennzeichnet, dass** an dem Baumscharnierunterteil (1) eine im wesentlichen horizontale Auflageplatte (108) unterhalb der Gelenkhülse (106) angeordnet ist, an der sich eine am Baumscharnieroberteil (2) auf der vom Baumstamm (3) abgewandten Seite angeordnete Kontur (206) bei Erreichen des Fallwinkels (6) abstützt, um durch das Fallen des Baumstammes (3) den Durchtritt des abgeflachten Gelenkbolzens (202) durch den Schlitz (107) der Gelenkhülse (106) zwangsweise zu bewirken.

4. Baumscharnier (1,2) nach einem der Ansprüche 1 bis 3,
**dadurch gekennzeichnet, dass** zwischen Baumstamm (3) und Baumstumpf (303) ein Fangelement (8) angeordnet ist, welches nach dem Freigeben des Baumscharnieroberteils (2) vom Baumscharnierunterteil (1) den Baumstamm (3) gegen weiteres Wegrutschen sichert.

## Claims

1. Tree hinge (1,2) for determining the falling direction (7) of a tree trunk (3) to be felled by means of a felling cut (302), having a swivel joint (106, 107, 202) to be arranged at the height of the intended felling cut (302) and hinged in the falling direction (7), said swivel joint having a tree hinge upper part (2) that can be attached to the tree trunk (3) above the felling cut (302) and a tree hinge lower part (1) attachable below the felling cut (302) on the tree stump (303) subject to the specified direction of fall (7), **characterized in that** the swivel joint (106,107,202) is of a separable design in order to release the tree hinge upper part (2) from the tree hinge lower part (1) when reaching a predetermined falling angle (6) of the tree trunk (3).

2. Tree hinge (1,2) according to claim 1, **characterized in that** said swivel joint (106,107,202) comprises a joint sleeve (106) with a slit (107) and a flattened joint pin (202), wherein the flattened joint pin (202) can only pass through the slit (107) of the joint sleeve (106) in the position of the falling angle (6).

3. Tree hinge (1,2) according to claim 2, **characterized in that** on the tree hinge lower part (1) a basically horizontal support plate (108) is arranged beneath the joint sleeve (106), against which a contour (206) arranged on the side of the tree hinge upper part (2) facing away from the tree trunk (3) braces itself when the falling angle (6) is reached so as to force the flattened swivel pin (202) to pass through the slit (107) of the joint sleeve (106) through the falling of the tree trunk (3).

4. Tree hinge (1,2) according to one of the claims 1 to 3, **characterized in that** a catch member (8) is arranged between the tree trunk (3) and tree stump (303) said member securing the tree trunk (3) against further slipping after the release of the tree hinge upper part (2) from the tree hinge lower part (1).

## Revendications

1. Charnière de tronc d'arbre (1, 2) pour prédéterminer la direction d'abattage (7) d'un tronc d'arbre (3) à abattre par un trait d'abattage (302), comprenant une articulation tournante (106, 107, 102) devant être agencée à la hauteur du trait d'abattage (302) à exécuter et pouvant être rabattue dans la direction d'abattage (7), laquelle présente une partie supérieure de charnière de tronc d'arbre (2) pouvant être fixée au-dessus du trait d'abattage (302) sur le tronc d'arbre (3) et une partie inférieure de charnière de tronc d'arbre (1) pouvant être fixée en dessous du trait d'abattage (302) sur la souche (303) conformément à la direction d'abattage prescrite (7), **caractérisée en ce que** l'articulation tournante (106, 107, 102) est réalisée de manière à pouvoir être divisée afin de libérer la partie supérieure de charnière de tronc d'arbre (2) de la partie inférieure de charnière de tronc d'arbre (1) dès qu'un angle d'abattage prescrit (6) du tronc d'arbre (3) est atteint.

2. Charnière de tronc d'arbre (1, 2) selon la revendication 1, **caractérisée en ce que** l'articulation tournante (106, 107, 102) est constituée d'un manchon articulé (106) présentant une fente (107) et d'un goujon articulé aplati (202), dans laquelle le goujon articulé aplati (202) peut passer à travers la fente (107) du manchon articulé (106) seulement dans la position de l'angle d'abattage (6).

3. Charnière de tronc d'arbre (1, 2) selon la revendication 2, **caractérisée en ce qu'**une plaque d'appui sensiblement horizontale (108) est agencée sur la partie inférieure de charnière de tronc d'arbre (1) en dessous du manchon articulé (106), sur laquelle s'appuie un contour (206) agencé sur la partie supérieure de charnière de tronc d'arbre (2) sur le côté détourné du tronc d'arbre (3) dès que l'angle d'abattage (6) est atteint afin de provoquer de manière forcée le passage du goujon articulé aplati (202) à travers la fente (107) du manchon articulé (106) suite à l'abattage du tronc d'arbre (3).

4. Charnière de tronc d'arbre (1, 2) selon l'une des revendications 1 à 3, **caractérisée en ce qu'**un élément de captage (8) est agencé entre le tronc d'arbre (3) et la souche (303), lequel empêche le tronc d'arbre (3) de continuer à glisser après que la partie supérieure de charnière de tronc d'arbre (2) ait été libérée de la partie inférieure de charnière de tronc d'arbre (1).
